# EUROPEAN PATENT APPLICATION

(11) **EP 4 272 581 A1**
(43) Date of publication of application: **08.11.2023**
(21) Application number: 21914756.8
(22) Date of filing: 30.12.2021
(51) Int. Cl.: A23P 30/40, B01F 23/235, B01F 23/236, B01F 23/231

(54) **DEVICE FOR GENERATING FLYING EDIBLE CLOUDS OR FOAMS**

(30) Priority: 30.12.2020 ES 202032831 U
(71) Applicant: Estruc 24, S.L., 08005 Barcelona (ES)
(72) Inventor: DE JUAN-CREIX, Ignacio, 08005 BARCELONA (ES)
(74) Representative: Espiell Gomez, Ignacio
(86) International application number: PCT/ES2021/070953
(87) International publication number: WO 2022/144486

(57) **Abstract**

The invention relates to a device for generating flying edible foams or clouds, comprising a container (2) suitable for holding liquids that has a lower housing (2a), provided with a lateral perforation (3), suitable for inserting a tube through which the gas is introduced, and an upper housing (2b) that is separated from the lower housing by means of a filter provided with holes (4). Preferably, the filter (4) is a metal plate, with a plurality of holes (4a) distributed on its surface with a diameter such that they prevent the fluid deposited thereon from moving through said holes towards the lower portion of the container but allow the passage of the gas from the lower portion of the container towards the upper portion thereof through the fluid deposited on the filter (4).

## Description

### OBJECT OF THE INVENTION

The invention, as stated in the title of the present specification, relates to a device for generating flying edible foams or clouds that contributes advantages and features to the function intended, which are described in detail further on.

The object of the present invention relates to a device which purpose is to achieve the generation of flying edible foams or clouds, in other words, groups of bubbles formed by an edible or drinkable fluid that contain a gas that is lighter than air, such as helium. Flying edible clouds generate a spectacular visual and sensory effect, being applicable, for example, in the culinary world and/or in events, such as parties or commercial promotions, as well as in children's games.

### FIELD OF APPLICATION OF THE INVENTION

The field of application of the present invention falls within the industry sector dedicated to the manufacture of kitchen and party appliances, devices and utensils.

### BACKGROUND OF THE INVENTION

As a reference to the current state of the art, although different types of utensils and devices applicable for introducing gases into some foods, for example siphons to make foams or the like, are known on the market at least by the applicant, the existence of any device that has technical and structural features equal or similar to those presented by the equipment that is claimed herein, with the purpose of generating flying edible foams or clouds that are stable and resistant enough to make the product float in the air like a cloud for a certain time, is unknown.

### DESCRIPTION OF THE INVENTION

The device for generating flying edible foams or clouds proposed by the invention is configured as the ideal solution to the aforementioned objective, the characterising details that make it possible and that distinguish it being conveniently included in the final claims that accompany this description.

Specifically, what the invention proposes, as previously noted, is a device which purpose is to achieve the stable generation of flying edible foams or clouds, in other words, groups of bubbles in a fluid, in particular bubbles of a gas that is lighter than air, such as helium, such that they are integrated inside a fluid consisting of a preparation, a compound or an edible and/or drinkable raw material, for example a cream or a drink, in such a way that it allows said fluid to be converted into a product in the form of a floating cloud, achieving a great spectacular visual and sensory effect, being applicable, for example, in the culinary world and/or in events, such as parties or commercial promotions, as well as in children's games.

For this, and more specifically, the device is essentially configured from a container suitable for holding fluids that has a lower housing, provided with a perforation, preferably lateral and suitable for inserting a tube through which the gas is introduced, and an upper housing that is separated from the lower housing by means of a filter provided with holes, such that, by incorporating the fluid to be prepared into the container and blowing the gas into it through the tube inserted in the lateral perforation of the lower housing, the holes in the filter cause the formation of clouds of said fluid formed from groups of gas bubbles integrated in the fluid.

Preferably, the container is a tubular body, with a base that is, for example, square, triangular or circular, having means to secure the position of the filter with holes between both portions, lower and upper, of the container, such as a perimeter recess between the lower and upper housing that defines an inner rim that acts as a stop to secure the position of the filter with holes.

Preferably, the filter is metal, preferably stainless steel.

Preferably, the filter has a perimeter seal on its rim, preferably made of silicone, to seal the fit to the inner wall of the container.

For its part, the container is preferably made of glass and has a lower support base that can be made of the same or another material.

In short, the device allows for a wide range of applications in all types of edible products, whether they are fluids, such as creams or the like, or drinkable liquids. The key is in the filter, since, depending on the arrangement of the holes, it allows gas, preferably helium, to enter into the fluid where the bubbles are generated and, due to said specific distribution, groups of sufficiently stable bubbles are generated so that they do not break and the fluid transforms into clouds that float or fly for some time.

Preferably, the distribution of the holes in the filter preferably has a hexagonal shape.

Preferably, the holes in the filter have a diameter such that they prevent the fluid deposited thereon from moving through the holes towards the lower portion of the container but allow the passage of the gas from the lower portion of the container towards the upper portion thereof through the fluid deposited on the filter.

### DESCRIPTION OF THE DRAWINGS

To complete the description provided herein, and for the purpose of helping to make the features of the invention more readily understandable, this description is accompanied by a set of drawings constituting an integral part of the same, which by way of illustration and not limitation represents the following:

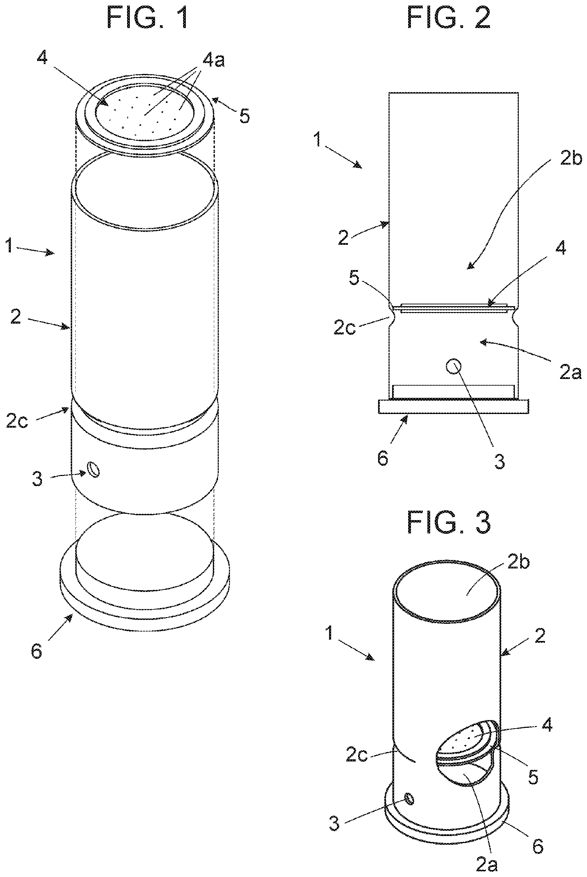

Figure 1 shows an exploded perspective view of an example of the device for generating flying edible foams or clouds object of the invention, showing the main parts and elements that it comprises;
Figure 2 shows a sectional elevation view, once assembled, of the example of the device for generating flying edible foams or clouds of the invention shown in Figure 1, showing its internal general configuration when it is assembled in the position of use; and
Figure 3 shows a partially sectioned perspective view of the device shown in the preceding figures, in this case showing its external appearance and the arrangement of the filter with which it is provided and which allows generating the bubbles that, once bonded to each other, generate the flying edible foams or clouds.

### PREFERRED EMBODIMENT OF THE INVENTION

In view of the aforementioned figures, and in accordance with the adopted numbering, one may observe therein a non-limiting exemplary embodiment of the device for generating flying edible foams or clouds of the invention, comprising what is described in detail below.

Thus, as can be seen in said figures, the device (1) of the invention essentially comprises a container (2) suitable for holding fluids that has a lower housing (2a), comprising a preferably lateral perforation (3) suitable for inserting a tube through which a gas (not shown) can be introduced, and an upper housing (2b) that is separated from the lower housing by means of a filter provided with holes (4) that defines both housings (2a, 2b) and, by incorporating the fluid to be prepared into the container in the upper housing (2b) and blowing the gas into the lower housing (2a) through the tube inserted in the lateral perforation (3), the holes in the filter (4) cause the formation of clouds of said fluid formed from groups of gas bubbles integrated in the fluid.

Preferably, the container (2) is a tubular body, for example with a round, square or triangular base, which has securing means for the filter provided with holes (4), such as a perimeter recess (2c) between the lower housing (2a) and the upper housing (2b) which defines an inner rim that acts as a stop to secure the position of said filter (4), between both portions, lower and upper, in an easily removable manner.

Preferably, the filter (4) is a metal plate, preferably made of stainless steel, provided with a plurality of holes (4a) distributed on its entire surface.

Preferably, the filter (4) has a perimeter seal (5) made of silicone, which fits on the inner wall of the container (2).

For its part, the container (2) is preferably made of glass and has a lower support base (6), which can be made of the same or another material and which, optionally, is an independent and removable part to facilitate cleaning of the assembly.

Having sufficiently described the nature of the present invention, as well as the ways in which it may be implemented, it is not considered necessary to elaborate on the explanation thereof in order for a person skilled in the art to understand the scope of the invention and the advantages derived therefrom.

## Claims

1. A device for generating flying edible foams or clouds, in particular for generating bonding of bubbles of a gas that is lighter than air, such as helium, such that they are integrated inside a fluid consisting of a preparation, a compound or an edible and/or drinkable raw material, for example a cream or a drink, converting said fluid into a product in the form of a floating cloud, **characterised in that** it comprises a container (2) suitable for holding liquids that has a lower housing (2a), provided with a lateral perforation (3), suitable for inserting a tube through which the gas is introduced, and an upper housing (2b) that is separated from the lower housing by means of a filter provided with holes (4).

2. The device for generating flying edible foams or clouds, according to claim 1, **characterised in that** the container (2) is a tubular body that has a perimeter recess (2c) between the lower housing (2a) and the upper housing (2b) that defines an inner rim that acts as a stop to secure the position of the filter with holes (4) between both portions, lower and upper, in an easily removable manner.

3. The device for generating flying edible foams or clouds, according to claims 1 or 2, **characterised in that** the container (2) is preferably cylindrical.

4. The device for generating flying edible foams or clouds, according to any of the preceding claims, **characterised in that** the filter (4) is a metal plate, with a plurality of holes (4a) distributed on its surface.

5. The device for generating flying edible foams or clouds, according to claims 1, 2 and 4, **characterised in that** the filter provided with holes (4) is made of stainless steel.

6. The device for generating flying edible foams or clouds, according to any of the preceding claims, **characterised in that** the filter (4) has a perimeter seal (5), preferably made of silicone, which fits on the inner wall of the container (2).

7. The device for generating flying edible foams or clouds, according to any of claims 1 to 3 and 6, **characterised in that** the container (2) is made of glass.

8. The device for generating flying edible foams or clouds, according to claims 1 to 3, 6 and 7, **characterised in that** the container (2) has a lower support base (6), preferably made of glass or another material.

9. The device for generating flying edible foams or clouds, according to claim 8, **characterised in that** the lower support base (6) is an independent and removable part of the container (2).

10. The device for generating flying edible foams or clouds, according to claim 4, **characterised in that** the arrangement of the holes (4a) in the filter (4) generates a hexagonal shape.

11. The device for generating flying edible foams or clouds, according to any of the preceding claims, **characterised in that** the holes (4a) in the filter (4) are of such a diameter that they prevent the fluid deposited thereon from moving through said holes towards the lower portion of the container but allow the passage of the gas from the lower portion of the container towards the upper portion thereof through the fluid deposited on the filter (4).
